# EUROPÄISCHE PATENTSCHRIFT

(11) **EP 2 570 791 B1**
(45) Veröffentlichungstag und Bekanntmachung des Hinweises auf die Patenterteilung: **19.10.2016**
(21) Anmeldenummer: 12184406.2
(22) Anmeldetag: 14.09.2012
(51) Int. Cl.: G01N 3/08

(54) **Vorrichtung zur Bestimmung der biaxialen Dehnungskennwerte einer Probe**
Device for determining the bi-axial elongation characteristics of a sample
Dispositif de détermination des valeurs caractéristiques d'extension biaxiales d'un échantillon

(30) Priorität: 15.09.2011 DE 102011113540
(43) Veröffentlichungstag der Anmeldung: 20.03.2013
(73) Patentinhaber: Bayern-Chemie Gesellschaft für flugchemische Antriebe mbH, 84544 Aschau a. Inn (DE)
(72) Erfinder: Mußbach, Günter, 01705 Freital (DE)
(74) Vertreter: LS-MP von Puttkamer Berngruber Loth Spuhler

(56) Entgegenhaltungen:
- FR-A1- 2 875 907
- JP-A- 2009 244 183
- SU-A1- 476 484
- SU-A1- 478 220
- US-A- 5 905 205

## Beschreibung

Die Erfindung bezieht sich auf eine Vorrichtung zur Bestimmung der biaxialen Dehnungskennwerte einer Probe mit einer Zugprüfmaschine nach dem Oberbegriff des Anspruchs 1.

Bei derartigen Vorrichtungen handelt es sich um Getriebe, welche durch ihre Kinematik die einachsige oder uniaxiale Beweglichkeit der zwei Proben-Spannelemente einer Universalprüfmaschine, auch Zugprüfmaschine genannt, wandeln zu einer zweiachsigen oder auch biaxialen Beweglichkeit weiterer vier Proben-Spannelemente, mit dem Ziel, das Materialverhalten einer Probe unter mehrachsiger Belastung zu untersuchen.

Eine derartige Vorrichtung ist aus SU 476 484 A1 bekannt, die in Kombination mit einer Zugprüfmaschine der Bestimmung von Dehnungskennwerten in zwei zueinander senkrechten Dehnungsachsen einer kreuzförmigen Probe dient, aber hinsichtlich der Kinematik des Getriebes die Nachteile aufweist, dass zum einen aufgrund eines fehlenden Synchronisationsmechanismus die Probe in ihren beiden Längsachsen nicht dasselbe Verformungsmaß erfährt und zum anderen aufgrund der Nutzung eines Kipphebel- anstelle eines Gleitmechanismus zur Auslenkung der zweiten Probenlängsachse bei gleichem Vorrichtungsbauraum die Maximaldehnung gegenüber der Erfindung eingeschränkt ist.

Ebenfalls bekannt ist eine derartige Vorrichtung aus FR 2 875 907 A1, die einerseits aufgrund der Kinematik des Getriebes ein ungünstiges Verhältnis von benötigtem Bauraum zu Maximaldehnung aufweist und sich darum nicht oder nur sehr eingeschränkt eignet, um in einer Temperier- oder Klimakammer betrieben zu werden und die andererseits in der Maximalkraft gegenüber der Erfindung eingeschränkt ist, da einige Linearführungen größeren Lagerbelastungen infolge mechanischer Drehmomente ausgesetzt sind und einige Linearführungen größeren Biegespannungen aufgrund größerem Hebelweg unterworfen sind.

Eine derartige Vorrichtung ist auch bereits aus US 6 860 156 B1 und "Journal of Testing and Evaluation", Vol. 35, No. 4, Seiten 1 bis 8, 2007 (on-line verfügbar über www.astm.org) bekannt. Die bekannten Vorrichtungen sind jedoch zu voluminös, um z.B. eine Bestimmung der biaxialen Dehnungskennwerte in einem herkömmlichen Klimaschrank durchführen zu können. Darüber hinaus ist bei der Vorrichtung nach US 6 860 15 A die Sicht auf die Probe während des Zugversuchs beeinträchtigt.

Aufgabe der Erfindung ist es, eine einfach aufgebaute Vorrichtung zur Bestimmung der biaxialen Dehnungskennwerte einer Probe mit einer Zugprüfmaschine bereitzustellen, die einen kleinen Bauraum aufweist und eine einwandfreie Sicht auf die Probe während des Zugversuchs erlaubt.

Dies wird erfindungsgemäß mit der im Anspruch 1 gekennzeichneten Vorrichtung erreicht. In den Unteransprüchen sind vorteilhafte Ausgestaltungen der erfindungsgemäßen Vorrichtung wiedergegeben.

Mit der erfindungsgemäßen Vorrichtung werden die biaxialen Dehnungskennwerte einer Probe in zwei zueinander senkrechten Achsen der Probe anhand des Spannungs- und Dehnungsdiagramms bestimmt. Mit den Dehnungskennwerten, wie Zugfestigkeit, Streckgrenze, Dehngrenze mit 0,2 % plastischer Verformung, Elastizitätsmodul und dergleichen werden insbesondere die Festigkeit, Plastizität bzw. Sprödigkeit und Elastizität eines Materials bestimmt. Bei der Probe kann es sich beispielsweise um einen Kunststoff oder ein Verbundmaterial, z.B. einen kunststoffgebundenen Festtreibstoff handeln.

Als Zugprüfmaschine kann erfindungsgemäß eine herkömmliche Zugprüfmaschine verwendet werden, die ein feststehendes Glied bzw. Traverse und ein bewegbares Glied oder Traverse sowie einen Kraftaufnehmer zur Messung der für die Verformung der Probe benötigten Kraft in Abhängigkeit von dem Weg des bewegbaren Gliedes aufweist.

Durch die Bewegung in einer Richtung, d.h. entlang der Zugprüfmaschinen-Zugachse des bewegten Gliedes wird die Probe biaxial in zwei senkrecht zueinander stehenden Dehnungsachsen belastet. Dazu sind in der Biaxialebene, in der die beiden Dehnungsachsen der Probe verlaufen, vier Probenhalter vorgesehen. Dabei greifen zwei der Probenhalter an den beiden Enden der Probe in der einen Dehnungsachse und die beiden anderen Probenhalter an den beiden Enden der Probe in der dazu senkrechten, zweiten Dehnungsachse an.

Die Probenhalter können beispielsweise durch Klemmen gebildet werden, um die Probe biaxial einzuspannen. Die Probe kann entsprechend den beiden zueinander senkrecht angeordneten Dehnungsachsen kreuzförmig ausgebildet sein, wobei die vier Probenhalter an den vier Enden der kreuzförmigen Probe angreifen.

Die erfindungsgemäße Vorrichtung weist einen Führungsrahmen auf, an dem die Probenhalter entlang der ersten und der zweiten Dehnungsachse der Probe geführt sind, wenn die Probe mit der Zugprüfmaschine biaxial belastet wird. Der Führungsrahmen kann in der Draufsicht rechteckig sein, insbesondere quadratisch ausgebildet sein, aber beispielsweise auch rund sein oder eine andere Form besitzen.

Zudem ist ein Zugrahmen vorgesehen, der aus zwei Rahmenteilen besteht, die in Bewegungsrichtung des bewegbaren Gliedes der Zugprüfmaschine, also in der Zugprüfmaschinen-Zugachse gegenübereinander verschiebbar ausgebildet sind. Dabei ist das eine Rahmenteil an dem feststehenden Glied bzw. der feststehenden Traverse der Zugprüfmaschine befestigt bzw. das bewegbare Glied bzw. die bewegbare Traverse der Zugprüfmaschine an dem anderen Rahmenteil befestigt.

Jedes der beiden Rahmenteile des Zugrahmens ist mit zwei beispielsweise als Schienen ausgebildeten Führungen versehen, entlang der die Probenhalter verschiebbar geführt sind.

Dabei sind an den beiden Führungen des einen Rahmenteils die beiden Probenhalter verschiebbar geführt, die an den dem ersten Rahmenteil zugewandten beiden Enden der Probe in der einen, ersten bzw. der dazu senkrechten zweiten Dehnungsachse der Probe angreifen. An den beiden Führungen des zweiten Rahmenteils sind die beiden Probenhalter verschiebbar geführt, die an den beiden dem zweiten Rahmenteil zugewandten Enden der Probe in der einen bzw. zweiten Dehnungsachse der Probe angreifen.

Die beiden Führungen oder Schienen jedes Rahmenteils verlaufen quer, insbesondere senkrecht zu der ersten bzw. zweiten Dehnungsachse der Probe, die zugleich die Führungsachse bildet, in der der Probenhalter an der jeweiligen Führung des Führungsrahmens verschiebbar geführt sind.

Wenn die eine der beiden Führungen oder Schienen jedes Rahmenteils des Zugrahmens senkrecht zu der ersten Dehnungsachse der Probe verläuft und die zweite Führung oder Schiene dieses Rahmenteils senkrecht zu der zweiten Dehnungsachse der Probe wird die Probe in beiden Dehnungsachsen der gleichen Dehnung unterworfen.

Wenn hingegen eine oder beide Führungen eines Rahmenteils des Zugrahmens die jeweilige Dehnungsachse der Probe nicht senkrecht schneiden, wird die Probe in den beiden Dehnungsachsen einer unterschiedlichen Dehnung unterworfen. Das heißt, durch die Steuerung des Winkels der Führungen des Zugrahmens kann die Dehnung der Probe in den beiden Dehnungsachsen gesteuert werden.

Das feststehende Glied und das bewegbare Glied der Zugprüfmaschine greifen in der biaxialen Ebene an dem einen Rahmenteil bzw. dem anderen Rahmenteil jeweils an einer auf der Zugprüfmaschinen-Zugachse liegenden Stelle an, an der sich die Führungsachsen der beiden Führungen des jeweiligen Rahmenteils des Zugrahmens schneiden. An den Stellen, an denen das feststehende bzw. das bewegbare Glied der Zugprüfmaschine an dem jeweiligen Rahmenteil angreift, kann jeweils eine Aufnahme zur Befestigung des feststehenden bzw. bewegbaren Gliedes vorgesehen sein.

Zur Zentrierung des Führungsrahmens zwischen den beiden Rahmenteilen des Zugrahmens ist ein Zentriergetriebe vorgesehen, mit dem die beiden Rahmenteile des Zugrahmens derart verschiebbar sind, dass die Mitte des Führungsrahmens, in der sich die beiden Dehnungsachsen schneiden, in der die Probenhalter an der Probe angreifen, stets in der Mitte zwischen den beiden Schnittpunkten positioniert ist, in denen sich die Führungsachsen der beiden Führungen jedes der beiden Rahmenteile schneiden.

Das Zentriergetriebe weist beiderseits der Zugprüfmaschinen-Zugachse jeweils zwei Hebel auf, welche einerseits an dem einen bzw. anderen Rahmenteil des Zugrahmens um eine zur Biaxialebene senkrecht verlaufende Achse und andererseits um eine dazu parallele Achse an einem Schieber verschwenkbar angelenkt sind, welcher an einer an der jeweiligen Seite des Führungsrahmens vorgesehenen, beispielsweise als Stange ausgebildeten Führung verschiebbar geführt ist. Die beiden an dem Führungsrahmen befestigten Führungen sind senkrecht zur Zugpüfmaschinen-Zugachse angeordnet und verlaufen in einer Achse, welche den Mittelpunkt des Führungsrahmens schneidet.

Zur Verschiebbarkeit der beiden Rahmenteile des Zugrahmens gegenübereinander ist beiderseits der Zugprüfmaschinen-Zugachse jeweils eine Führung zwischen den beiden Rahmenteilen vorgesehen. Dabei sind die an dem Führungsrahmen vorgesehenen beiden Führungen oder Stangen für die beiden Schieber ihrerseits entlang den Führungen zwischen den beiden Rahmenteilen des Zugrahmens geführt, die parallel zur Zugachse verlaufen.

Mit der erfindungsgemäßen Vorrichtung wird durch die Bewegung des bewegbaren Gliedes in der Zugachse der Zugprüfmaschine die Probe biaxial in zwei senkrecht zueinander stehenden Achsen belastet. Dabei ist die Ebene, in der die Dehnungen der Probe erzeugt werden, für den Betrachter praktisch vollständig einsehbar. Damit ist es z.B. möglich, auf der Probe Markierungen aufzubringen, um deren Dehnung zu verfolgen.

Nach der Erfindung werden die Dehnungen der Probe in den beiden senkrecht zueinander stehenden Dehnungsachsen geometrisch definiert. Von der Probe eingeleitete Kräfte spielen bei der Entstehung der Dehnungen keine Rolle.

Die Dehnungen der Probe in den Dehnungsachsen stehen in linearem Zusammenhang mit der Bewegung, die durch die Zugprüfmaschine ausgelöst wird.

Die erfindungsgemäße Vorrichtung benötigt nur einen kleinen Bauraum und ist in konventionellen, einachsigen Zugprüfmaschinen verwendbar.

Durch den kleinen Bauraum ist die Aufnahme der Vorrichtung in einem Behälter möglich, um die Dehnungskennwerte der Probe unter definierten Umweltbedingungen, also insbesondere unter definierten Temperatur- und/oder Feuchtigkeitsbedingungen zu bestimmen.

Dazu kann erfindungsgemäß ein handelsüblicher Klimaschrank eingesetzt werden, der lediglich mit jeweils einer Öffnung auf gegenüberliegenden Seiten zu versehen ist, wobei die Öffnung auf einer Seite zur Befestigung des feststehenden Gliedes an dem einen Rahmenteil und die Öffnung auf der gegenüberliegenden Seite zur Befestigung des bewegbaren Gliedes der Zugprüfmaschine an dem anderen Rahmenteil dient. Diese Klimaschränke existieren am Markt mit den Öffnungen für die Zugprüfmaschine; sie sind werksseitige Zubehörteile.

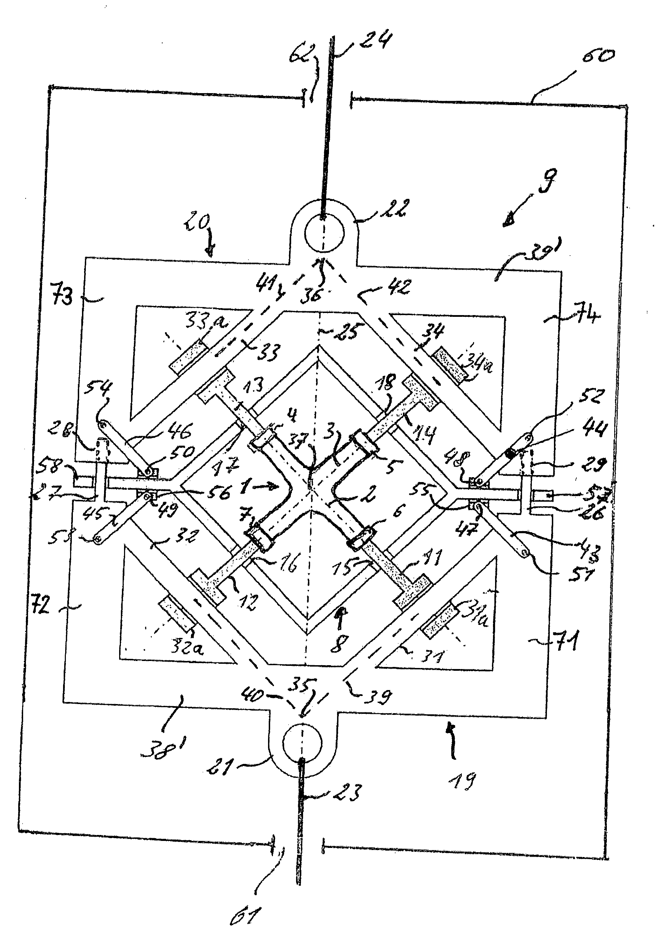

Nachstehend ist die Erfindung anhand der beigefügten Zeichnung beispielhaft näher erläutert, deren einzige Figur schematisch eine Draufsicht auf die in einem Klimaschrank angeordnete Vorrichtung zeigt.

Danach weist die Vorrichtung zur Bestimmung der biaxialen Dehnungskennwerte einer Probe 1 in zwei zueinander senkrechten Dehnungsachsen 2, 3 vier Probenhalter 4, 5, 6, 7, einen Führungsrahmen 8 und einen Zugrahmen 9 auf.

Die vier Probenhalter 4, 5, 6, 7, der Führungsrahmen 8 und der Zugrahmen 9 sind in der durch die Zeichenebene gebildeten Biaxialebene angeordnet, in der die beiden Dehnungsachsen 2, 3 verlaufen.

Jeweils zwei Probenhalter 4 und 6 bzw. 5 und 7 greifen an den beiden Enden der Probe in der einen Dehnungsachse 2 bzw. der anderen Dehnungsachse 3 an. Die Probenhalter 4, 5, 6, 7 können durch Klemmen gebildet sein, um die Probe 1 biaxial einzuspannen. Die Probe 1 kann, wie in der Zeichnung dargestellt, kreuzförmig ausgebildet sein, wobei die vier Probenhalter 4, 5, 6, 7 an den vier Enden der kreuzförmigen Probe 1 angreifen.

An dem Führungsrahmen 8 sind die Probenhalter 4 und 6 entlang der Dehnungsachse 2 und die Probenhalter 5 und 7 entlang der Dehnungsachse 3 verschiebbar geführt. Dazu ist jeder Probenhalter 4, 5, 6, 7 mit einer Stange 11, 12, 13, 14 versehen, die beispielsweise in einer Öffnung 15, 16, 17, 18 in der Mitte jeder der vier Seiten des in der Draufsicht quadratisch ausgebildeten Führungsrahmens 8 vorgesehen ist.

Der Zugrahmen 9 besteht aus zwei Rahmenteilen 19, 20, die jeweils mit einer Aufnahme 21, 22 versehen sind, an denen das z.B. als Traverse ausgebildete feststehende Glied 23 bzw. das beispielsweise als Traverse ausgebildete bewegbare Glied 24 einer nicht dargestellten Zugprüfmaschine angreift, und zwar in Bewegungsrichtung des bewegbaren Gliedes 24, also in der Zugprüfmaschinen-Zugachse 25.

Die beiden Rahmenteile 19, 20 des Zugrahmens 9 sind in Bewegungsrichtung des bewegbaren Gliedes 24 gegenübereinander verschiebbar ausgebildet. Dazu weist das eine Rahmenteil 19 beispielsweise zwei sich auf beiden Seiten der Zugachse 25 angeordnete parallel zur Zugachse 25 verlaufende Zapfen 26, 27 auf, die in einer zweiten Führung 28, 29 in dem anderen Rahmenteil 20 geführt sind.

Jedes der beiden Rahmenteile 19, 20 des Zugrahmens 9 ist mit zwei ersten Führungen 31, 32 bzw. 33, 34 versehen, entlang der die Probenhalter 4, 5, 6, 7 verschiebbar geführt sind. Dabei sind an den beiden ersten Führungen 31, 32 die beiden Probenhalter 6, 7 geführt, die an den beiden Enden der Probe 1 in der einen Dehnungsachse 2 bzw. in der dazu senkrechten Dehnungsachse 3 angreifen und dem Rahmenteil 19 zugewandt sind.

An den beiden ersten Führungen 33 und 34 des zweiten Rahmenteils 20 sind die beiden Probenhalter 4, 5 verschiebbar geführt, die an den beiden gegenüberliegenden, also dem Rahmenteil 20 zugewandten Ende der Probe 1 in der einen Dehnungsachse 2 bzw. der anderen Dehnungsachse 3 angreifen.

Die beiden ersten Führungen 31, 32 bzw. 33, 34 jedes Rahmenteils 19, 20 verlaufen quer, und zwar senkrecht zu der ersten Dehnungsachse 2 bzw. der zweiten Dehnungsachse 3 der Probe 1.

Die Stangen 11, 12, 13, 14, an denen die Probenhalter 4, 5, 6 7 befestigt sind, sind zur verschiebbaren Führung an den ersten Führungen 31, 32, 33, 34 mit jeweils einem Schieber 31a, 32a, 33a, 34a versehen.

Die Längsachsen 39, 40 bzw. 41, 42 der ersten Führungen 31, 32 bzw. 33, 34 des jeweiligen Rahmenteils 19, 20 schneiden sich an den Schnittpunkten 35, 36, die auf der Zugprüfmaschinen-Zugachse 25 liegen.

Die Vorrichtung weist ferner ein Zentriergetriebe auf, mit dem die beiden Rahmenteile 19, 20 des Zugrahmens 9 derart verschiebbar sind, dass die Mitte 37 des Führungsrahmens 8, in der sich die beiden Dehnungsachsen 2, 3 schneiden, unabhängig von der Bewegung des bewegbaren Gliedes 24 der Zugprüfmaschine stets in der Mitte zwischen den beiden Schnittpunkten 35, 36 positioniert ist, in denen sich die Führungsachsen 39, 40 bzw. 41, 42 der beiden ersten Führungen 31, 32 bzw. 33, 34 der beiden Rahmenteile 19, 20 des Führungsrahmens 9 schneiden.

Die beiden ersten Führungen 31, 32 bzw. 33, 34 jedes der beiden Rahmenteile 19, 20 sind mit ihrem einen Ende an einem Träger 38`, 39' befestigt, an dem die Aufnahme 21 bzw. 22 zur Befestigung des feststehenden Gliedes 23 bzw. des bewegbaren Gliedes 24 der Zugprüfmaschine vorgesehen ist.

Jeder Träger 38', 39' ist beiderseits der Aufnahme 21, 22 jeweils mit einem parallel zu der Zugprüfmaschinen-Zugrichtung 25 verlaufenden Abschnitt 71, 72 bzw. 73, 74 versehen, an dem das andere Ende der auf der jeweiligen Seite angeordneten ersten Führung 31, 32 bzw. 33, 34 befestigt ist. An den Abschnitten 71, 72 und 73, 74 sind die Zapfen 26, 27 bzw. die zweiten Führungen 28, 29 für die Zapfen 26, 27 vorgesehen.

Das Zentriergetriebe weist beiderseits der Zugprüfmaschinen-Zugachse 25 jeweils zwei Hebel 43, 44 bzw. 45, 46 auf, welche einerseits an dem einen Rahmenteil 19 bzw. dem anderen Rahmenteil 20 um eine zur Biaxialebene also zur Zeichenebene senkrecht verlaufende Achse 51, 52 bzw. 53, 54 und andererseits um eine dazu parallele Achse 47, 48 bzw. 49, 50 an einem Schieber 55, 56 verschwenkbar angelenkt sind, welcher an einer an der jeweiligen Seite des Führungsrahmens 8 als Stange ausgebildeten dritten Führung 57, 58 verschiebbar geführt ist, wobei die beiden dritten Führungen 57, 58 in einer Achse senkrecht zur Zugprüfmaschinen-Zugachse 25 verlaufen, welche den Mittelpunkt 37 der Probe 1 und damit des Führungsrahmens 8 schneidet.

Zugleich sind die beiden Führungen 57, 58 parallel zu der Zugachse 25 an den beiden Zapfen 26, 27 zwischen den beiden Rahmenteilen 19, 20 parallel zur Zugachse 25 verschiebbar geführt.

Die erfindungsgemäße Vorrichtung kann in einem in der Zeichnung schematisch im Schnitt dargestellten Klimaschrank 60 angeordnet werden, der auf gegenüberliegenden Seiten mit Öffnungen 61, 62 versehen ist, durch die sich das feststehende Glied 23 bzw. das bewegbare Glied 24 der Zugprüfmaschine erstreckt.

## Patentansprüche

1. Vorrichtung zur Bestimmung der Dehnungskennwerte einer Probe (1) in zwei zueinander senkrechten Dehnungsachsen (2, 3) mit
einer Zugprüfmaschine, die ein feststehendes Glied (23) und ein entlang einer Zugachse (25) bewegbares Glied (24) aufweist, und
vier Probenhaltern (4, 5, 6, 7), von denen jeweils zwei (4, 6; 5, 7) an der Probe (1) in der ersten bzw. zweiten Dehnungsachse (2, 3) angreifen,
einem Führungsrahmen (8), an dem die Probenhalter (4, 6; 5, 7) entlang der ersten bzw. zweiten Dehnungsachse (2, 3) geführt sind,
einem Zugrahmen (9) aus zwei entlang der Zugachse (25) verschiebbaren Rahmenteilen (19, 20), an denen das feststehende Glied (23) bzw. das bewegbare Glied (24) der Zugprüfmaschine angreift und die jeweils zwei erste Führungen (31, 32 bzw. 33, 34) aufweisen, an denen die beiden benachbarten Probenhalter (6, 7; 4, 5) quer zu der einen bzw. anderen Dehnungsachse (2, 3) geführt sind und deren Achsen (39, 40; 41, 42) sich in der Zugachse (25) schneiden, und
einem Zentriergetriebe, mit dem die beiden Rahmenteile (19, 20) derart verschiebbar sind, dass die Mitte (37) des Führungsrahmens (8) in der Mitte zwischen den beiden Schnittpunkten (35, 36) der Achsen (39, 40; 41, 42) der ersten Führungen (31, 32; 33, 34) positioniert ist,
wobei jeder Probenhalter (4, 5, 6, 7) an dem Führungsrahmen (8) mit einem sich entlang der jeweiligen Dehnungsachse (2, 3) der Probe (1) erstreckendem Verbindungsglied (11, 12, 13, 14) verschiebbar geführt ist, und wobei an der von der Probe (1) abgewandten Seite des Führungsrahmens (8) jeweils ein erster Schieber (31a, 32a, 33a, 34a) vorgesehen ist, mit dem das Verbindungsglied (11, 12, 13, 14) entlang der jeweiligen ersten Führung (31, 32, 33, 34) des Zugrahmens (9) verschiebbar geführt ist, und wobei zur Verschiebbarkeit der beiden Rahmenteile (19, 20) des Zugrahmens (9) gegenüber einander beiderseits der Zugachse (25) jeweils eine zweite Führung (28, 29) zwischen den beiden Rahmenteilen vorgesehen ist, **dadurch gekennzeichnet, dass** das Zentriergetriebe beiderseits der Zugachse (25) jeweils zwei Hebel (43, 44 bzw. 45, 46) aufweist, welche einerseits an dem einen bzw. anderen Rahmenteil (19 bzw. 20) des Zugrahmens (9) und andererseits an einem von zweiten Schiebern (55, 56) verschwenkbar angelenkt sind, und die zweiten Schieber (55, 56) an einer dritten Führung (57, 58) verschiebbar geführt sind,
wobei sich die beiden dritten Führungen (57, 58) entlang einer Achse erstrecken, die sich senkrecht zur Zugachse (25) erstreckt und den Mittelpunkt (37) des Führungsrahmens (8) schneidet.

2. Vorrichtung nach Anspruch 1, **dadurch gekennzeichnet, dass** die Probenhalter (4, 6 bzw. 5, 7) durch die ersten Führungen (31, 33 bzw. 32, 34) senkrecht zu der ersten bzw. zweiten Dehnungsachse (2, 3) der Probe (1) verschiebbar geführt sind.

3. Vorrichtung nach Anspruch 1 oder 2, **dadurch gekennzeichnet, dass** die beiden ersten Führungen (31, 32 bzw. 33, 34) jedes der beiden Rahmenteile (19, 20) mit ihrem einen Ende an einem Träger (38', 39`) befestigt sind, wobei das feststehende Glied (23) der Zugprüfmaschine an dem Träger (38') des einen Rahmenteils (19) und das bewegbare Glied (24) an dem Träger (39') des anderen Rahmenteils (20) angreift.

4. Vorrichtung nach Anspruch 3, **dadurch gekennzeichnet, dass** jeder Träger (38', 39') beiderseits der Stelle (21, 22), an der das feststehende Glied (23) bzw. das bewegbare Glied (24) der Zugprüfmaschine angreift, jeweils parallel zur Zugachse (25) verlaufende Abschnitte (71, 72 bzw. 73, 74) aufweist, an denen das andere Ende der auf der jeweiligen Seite angeordneten ersten Führung (31, 32 bzw. 33, 34) befestigt ist.

5. Vorrichtung nach einem der vorstehenden Ansprüche, **gekennzeichnet durch** einen Behälter (60) zur Aufnahme der Probe (1), deren Dehnungskennwerte zu bestimmen sind, unter definierten Umweltbedingungen, wobei der Behälter (60) auf einer Seite eine Öffnung (41) zur Befestigung des feststehenden Gliedes (23) und auf der gegenüberliegenden Seite eine Öffnung (62) zur Befestigung des bewegbaren Gliedes (24) der Zugprüfmaschine an dem einen bzw. anderen Rahmenteil (19, 20) des Zugrahmens (9) aufweist.

## Claims

1. Device for determining the elongation characteristics of a specimen (1) in two elongation axes (2, 3) which are perpendicular to each other with
a tension testing machine having a stationary member (23) and a member (24) movable along a tensile axis (25), and
four specimen holders (4, 5, 6, 7), two (4, 6; 5, 7) of which engage with the specimen (1) in the first and the second elongation axis (2, 3), respectively,
a guide frame (8) on which the specimen holders (4, 6; 5, 7) are guided along the first and the second elongation axis (2, 3), respectively,
a tension frame (9) comprising two frame parts (19, 20) which are movable along the tensile axis (25) and with which the stationary member (23) and the movable member (24) of the tension testing machine engage, respectively, and
each of which has two first guides (31, 32 and 33, 34) on which the two adjacent specimen holders (6, 7; 4, 5) are guided transversely to the elongation axis (2, 3) and the axes (39, 40; 41, 42) of which intersect on the tensile axis (25), and
a centring gear mechanism by means of which the two frame parts (19, 20) are movable in such a way that the centre (37) of the guide frame (8) is positioned in the centre between the two points of intersection (35, 36) of the axes (39, 40; 41, 42) of the first guides (31, 32; 33, 34),
wherein each specimen holder (4, 5, 6, 7) is movably guided on the guide frame (8) by means of a connecting element (11, 12, 13, 14) extending along the respective elongation axis (2, 3) of the specimen (1), and
wherein on the side of the guide frame (8) facing away from the specimen (1), a first slide (31a, 32a, 33a, 34a) is respectively provided by means of which the connecting element (11, 12, 13, 14) is movably guided along the respective first guide (31, 32, 33, 34) of the tension frame (9), and wherein on both sides of the tensile axis (25), a second guide (28, 29) is provided between the two frame parts in order that the two frame parts (19, 20) of the tension frame (9) are movable relative to each other,
**characterized in that** on both sides of the tensile axis (25), the centring gear mechanism has two levers (43, 44 and 45, 46) which are pivotally hinged to the frame part (19 and 20) of the tension frame (9) on the one side and to one of second slides (55, 56) on the other side, and that the second slides (55, 56) are movably guided on a third guide (57, 58), wherein the two third guides (57, 58) extend along an axis extending perpendicularly to the tensile axis (25) and intersecting the centre (37) of the guide frame (8).

2. Device according to claim 1, **characterized in that** the specimen holders (4, 6 and 5, 7) are movably guided perpendicularly to the first and second elongation axis (2, 3) of the specimen (1) by the first guides (31, 33 and 32, 34).

3. Device according to claim 1 or 2, **characterized in that** the two first guides (31, 32 and 33, 34) of each of the two frame parts (19, 20) are attached at one end to a support (38', 39'), wherein the stationary member (23) of the tension testing machine engages with the support (38') of the one frame part (19) and the movable member (24) engages with the support (39') of the other frame part (20).

4. Device according to claim 3, **characterized in that** on both sides of the position (21, 22) at which the stationary member (23) and the movable member (24) of the tension testing machine engage, each support (38', 39') has sections (71, 72 and 73, 74) which each run parallel to the tensile axis (25) and to which the other end of the first guide (31, 32 and 33, 34) arranged on the respective side is attached.

5. Device according to one of the preceding claims, **characterized by** a container (60) for receiving the specimen (1) the elongation characteristics of which are to be determined under defined environmental conditions, wherein the container (60) has on one side an opening (41) for attaching the stationary member (23) and on the opposite side an opening (62) for attaching the movable member (24) of the tension testing machine to the frame part (19 and 20) of the tension frame (9).

## Revendications

1. Dispositif de détermination des valeurs caractéristiques d'extension d'un échantillon (1) dans deux axes d'extension (2, 3) perpendiculaires l'un par rapport à l'autre, comportant
une machine d'essai de traction qui présente un élément (23) fixe et un élément mobile (24) le long d'un axe de traction (25) et
quatre porte-échantillons (4, 5, 6, 7) dont deux (4, 6 ; 5, 7) attaquent l'échantillon (1) dans les premier et deuxième axes d'extension (2, 3), respectivement,
un cadre de guidage (8) sur lequel les quatre porte-échantillons (4, 6 ; 5, 7) sont guidés le long des premier et deuxième axes d'extension (2, 3), respectivement,
un cadre de traction (9) constitué par deux parties de cadre (19, 20) déplaçables le long de l'axe de traction (25), lesquelles attaquent l'élément fixe (23) et l'élément mobile (24), respectivement, de la machine d'essai de traction, et
qui présentent chacun deux premiers guidages (31, 32 et 33, 34) respectifs sur lesquels sont guidés les deux porte-échantillons (6, 7 ; 4, 5) transversalement à l'un et à l'autre axe d'extension (2, 3), respectivement, et dont les axes (39, 40 ; 41, 42) se coupent dans l'axe de traction (25), et
un engrenage de centrage avec lequel les deux parties de cadre (19, 20) peuvent être déplacées de telle sorte que le centre (37) du cadre de guidage (8) est positionné au milieu entre les deux points d'intersection (35, 36) des axes (39, 40; 41, 42) des premiers guidages (31, 32 ; 33, 34),
chaque porte-échantillon (4, 5, 6, 7) étant guidé de manière déplaçable sur le cadre de guidage (8) avec un élément de liaison (11, 12, 13, 14) s'étendant le long de l'axe d'extension (2, 3) respectif de l'échantillon (1), et
sur la face du cadre de guidage (8) détournée de l'échantillon (1) étant prévu un premier coulisseau (31 a, 32a, 33a, 34a) respectif avec lequel l'élément de liaison (11, 12, 13, 14) est guidé de manière déplaçable le long du premier guidage (31, 32, 33, 34) du cadre de traction (9) et un deuxième guidage (28, 29) respectif étant prévu entre les deux parties de cadre pour la capacité de déplacement des deux parties de cadre (19, 20) du cadre de traction (9) l'une par rapport à l'autre des deux côtés de l'axe de traction (25),
**caractérisé en ce que**
l'engrenage de centrage présente des deux côtés de l'axe de traction (25) deux leviers (43, 44 et 45, 46) respectifs qui sont articulés à pivotement d'une part sur l'une et l'autre des parties de cadre (19 et 20) respectives du cadre de traction (9) et d'autre part sur l'un des deuxièmes coulisseaux (55, 56), et les deuxièmes coulisseaux (55, 56) sont guidés de manière déplaçable sur un troisième guidage (57, 58), les deux troisièmes guidages (57, 58) s'étendant le long d'un axe qui s'étend perpendiculairement à l'axe de traction (25) et coupe le centre (37) du cadre de guidage (8).

2. Dispositif selon la revendication 1, **caractérisé en ce que** les porte-échantillons (4, 6 et 5, 7) respectifs sont guidés de manière déplaçable par les premiers guidages (31, 33 et 32, 34) respectifs perpendiculairement aux premier et deuxième axes d'extension (2, 3) respectifs de l'échantillon (1).

3. Dispositif selon la revendication 1 ou 2, **caractérisé en ce que** les deux premiers guidages (31, 32, et 33, 34) respectifs de chacune des deux parties de cadre (19, 20) sont fixés avec une de leurs extrémités à un support (38', 39'), l'élément fixe (23) de la machine d'essai de traction attaquant le support (38') de ladite une partie de cadre (19), et l'élément mobile (24) attaquant le support (39') de l'autre partie de cadre (20).

4. Dispositif selon la revendication 3, **caractérisé en ce que** chaque support (38', 39') présente des deux côtés de l'emplacement (21, 22) que l'élément fixe (23) et l'élément mobile (24) de la machine d'essai de traction attaquent respectivement, des tronçons (71, 72 et 73, 74) respectifs s'étendant chacun parallèlement à l'axe de traction (25), sur lesquels est fixée l'autre extrémité du premier guidage (31, 32 et 33, 34) respectif agencé sur la face respective.

5. Dispositif selon l'une des revendications précédentes, **caractérisé par** un récipient (60) destiné à recevoir l'échantillon (1) dont les valeurs caractéristiques d'extension doivent être déterminées sous des conditions atmosphériques définies, le récipient (60) présentant sur une face une ouverture (41 ) pour fixer l'élément fixe (23) et sur la face opposée une ouverture (62) pour fixer l'élément mobile (24) de la machine d'essai de traction sur l'une et l'autre partie de cadre (19, 20) respective du cadre de traction (9).
